Europäisches Patentamt

European Patent Office

Office européen des brevets

(11) Veröffentlichungsnummer: **0 260 341**
**B1**

(12) **EUROPÄISCHE PATENTSCHRIFT**

(45) Veröffentlichungstag der Patentschrift:
**27.12.89**

(21) Anmeldenummer: **86112967.4**

(22) Anmeldetag: **19.09.86**

(51) Int. Cl.⁴: **F16L 55/16**

(54) Verfahren zum Sanieren einer im Erdreich verlegten Rohrleitung.

(43) Veröffentlichungstag der Anmeldung:
**23.03.88 Patentblatt 88/12**

(45) Bekanntmachung des Hinweises auf die Patenterteilung:
**27.12.89 Patentblatt 89/52**

(84) Benannte Vertragsstaaten:
**GB**

(56) Entgegenhaltungen:
**EP-A- 0 145 654**
**GB-A- 2 082 285**
**GB-A- 2 094 178**
**GB-A- 2 096 265**
**GB-A- 2 138 322**
**US-A- 4 456 401**

(73) Patentinhaber: **Müller, Hans, Brauergildestrasse 5, D-4938 Schieder-Schwalenberg 2(DE)**

(72) Erfinder: **Müller, Hans, Brauergildestrasse 5, D-4938 Schieder-Schwalenberg 2(DE)**
Erfinder: **Suerbaum, Hermann, Ahornweg 6, D-4938 Schieder-Schwalenberg Lothe(DE)**

(74) Vertreter: **Stracke, Alexander, Dipl.-Ing. et al, Jöllenbecker Strasse 164, D-4800 Bielefeld 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung bezieht sich auf ein Verfahren zum Sanieren einer im Erdreich verlegten Rohrleitung, vorzugsweise eines Abwasserkanales, mittels eines Auskleideschlauches, der aus einer äußeren Deckschicht und einer angrenzenden harzabsorbierenden Innenschicht besteht, die vor dem Einbringen des Auskleideschlauches mit Harz getränkt wird und bei dem der Auskleideschlauch mittels eines Kalibrierschlauches gegen die Innenfläche der zu sanierenden Rohrleitung gepreßt wird.

Verfahren der in Rede stehenden Art sind beispielsweise aus der DE-A 2 240 153 und der DE-A 2 362 784 bekannt. Die Aushärtung der Harzschicht erfolgt mittels Wärmezufuhr. Dazu wird in die zu sanierende Rohrleitung Wasser mit einer Temperatur von ca. 80° C eingebracht. Je nach Art des Verfahrens zur Einbringung des Auskleideschlauches wird das Wasser nach oder während seines Einbringens zugeführt. Da die Aushärtung sich normalerweise über eine Dauer von 24 Stunden erstreckt, muß dieses Wasser auf der relativ hohen Temperatur gehalten werden, wozu in Anbetracht der großen Menge ein entsprechend hoher Verbrauch von Energie mit entsprechenden Kosten notwendig ist. Da, wie bereits ausgeführt, die Aushärtung sich über 24 Stunden erstreckt, ist während dieser Zeit eine Überwachung notwendig, wodurch die Kosten noch erhöht werden.

Der vorliegenden Erfindung liegt demgegenüber die Aufgabe zugrunde, ein Verfahren der eingangs genannten Art so weiter zu entwickeln, daß die Aushärtung der Harzschicht des Auskleideschlauches in einfacher und kostenvermindernder Weise erfolgt.

Zur Lösung der gestellten Aufgabe ist erfindungsgemäß vorgesehen, daß der Kalibrierschlauch vor dem Einführen in den Auskleideschlauch an der der Harzschicht des Auskleideschlauches zugewandt liegenden Seite mit einer Schicht versehen wird, die bei der Berührung mit der Harzschicht des Auskleideschlauches eine chemische Reaktion zur Aushärtung zumindest der Harzschicht des Auskleideschlauches einleitet.

Es ist nunmehr in verblüffend einfacher Weise möglich, die Aushärtung ohne Zufuhr von Wärmeenergie durchzuführen. Die entstehenden Kosten werden dadurch erheblich reduziert. Außerdem wird die Aushärtung noch wesentlich beschleunigt, wodurch der Vorgang des Auskleidens unter weiterer Reduzierung der Kosten noch wesentlich verkürzt wird. Es kann davon ausgegangen werden, daß bei einer geeigneten Beschichtung des Kalibrierschlauches die Aushärtzeit nur noch ca. 25 % der ursprünglichen Dauer beträgt.

Besonders vorteilhaft ist, wenn auch die Schicht des Kalibrierschlauches bei der Berührung mit der Harzschicht des Auskleideschlauches aushärtet, da man davon ausgehen kann, daß aus den zwei zweischichtigen Schläuchen dann ein dreischichtiger Schlauch gebildet wird. Dadurch wird die benötigte Menge an aushärtbaren Materialien gegenüber den bekannten Verfahren nicht erhöht. Es muß nämlich davon ausgegangen werden, daß eine bestimmte Menge notwendig ist, damit der Auskleideschlauch die notwendige Festigkeit erhält. Bei Anwendung des erfindungsgemäßen Verfahrens kann man davon ausgehen, daß nach dem Aushärtung der Kalibrierschlauch Teil des Auskleideschlauches ist, da die chemische Reaktion im Sinne einer Verwalkung der Schichten gesehen werden kann.

Ferner ist besonders vorteilhaft, wenn die dem Auskleideschlauch zugewandt liegende Schicht des Kalibrierschlauches als eine harzabsorbierende Schicht ausgebildet ist, da sich dann der Kalibrierschlauch von dem Auskleideschlauch nur dadurch unterscheidet, daß die Schicht des Kalibrierschlauches außen liegt. Ferner ist dann noch besonders vorteilhaft, wenn zumindest eine der harzabsorbierenden Schichten bis über den Sättigungsgrad hinaus mit Harz getränkt wird, und daß das überschüssige Harz durch in der äußeren Deckschicht des Auskleideschlauches vorgesehene Öffnungen zur Bildung einer zusätzlichen Dichtmasse nach außen gepreßt wird. Es erfolgt dann noch eine zusätzliche Abdichtung, da das überschüssige Harz dann beispielsweise in Risse der Kanalrohrwandung oder in undichte Rohrverbindungen eindringen kann.

Da der Auskleidungsschlauch bei diesem Verfahren in das zu sanierende Rohr eingezogen bzw. eingeschwommen wird, kann der Auskleidungsschlauch in besonders vorteilhafter Weise als ein mit Harz getränkter Glasfaserschlauch ausgebildet sein. Bei bekannten Verfahren dieser Art, die den Auskleidungsschlauch durch Umstülpen bzw. Inversieren in die zu sanierende Rohrleitung einbringen, ist die Ausbildung als Glasfaserschlauch nicht möglich. Die auftretenden hohen Walkarbeiten und Verformungen während des Umstülpens bzw. Inversierens erlauben nicht die Verwendung von Glasfaserschläuchen. Für die Sanierung von Druckleitungen (Wasser, Gas) ist aber die Verwendung von Materialien mit einem hohen Elastizitäts-Modul wie z. B. Glas von größter Bedeutung.

Weitere kennzeichnende Merkmale einer vorteilhaften Ausgestaltung der vorliegenden Erfindung sind Gegenstand weiterer Unteransprüche und ergeben sich aus der nachfolgenden Beschreibung eines bevorzugten Ausführungsbeispieles.
Es zeigen:

Figur 1 eine zwischen zwei Kontrollschichten liegende Teilstrecke einer Rohrleitung mit einem eingezogenen Auskleideschlauch in Schnittdarstellung,
Figur 2 einen Teilausschnitt der Rohrleitung nach der Figur 1, die Einbringung des Kalibrierschlauches zeigend,
Figur 3 Die Teilstrecke nach Figur 1 nach der Aushärtung,
Figur 4 Die Teilstrecke nach der Figur 3 im Schnitt,
Figur 5 eine der Figur 4 entsprechende Darstellung, bei der jedoch die äußere Deckschicht des Auskleideschlauches vollkommen geschlossen ist.

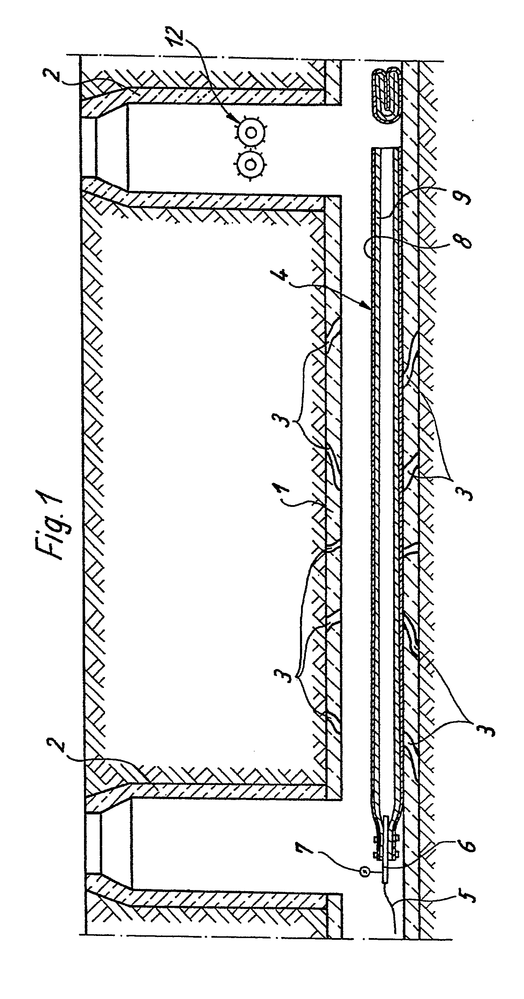

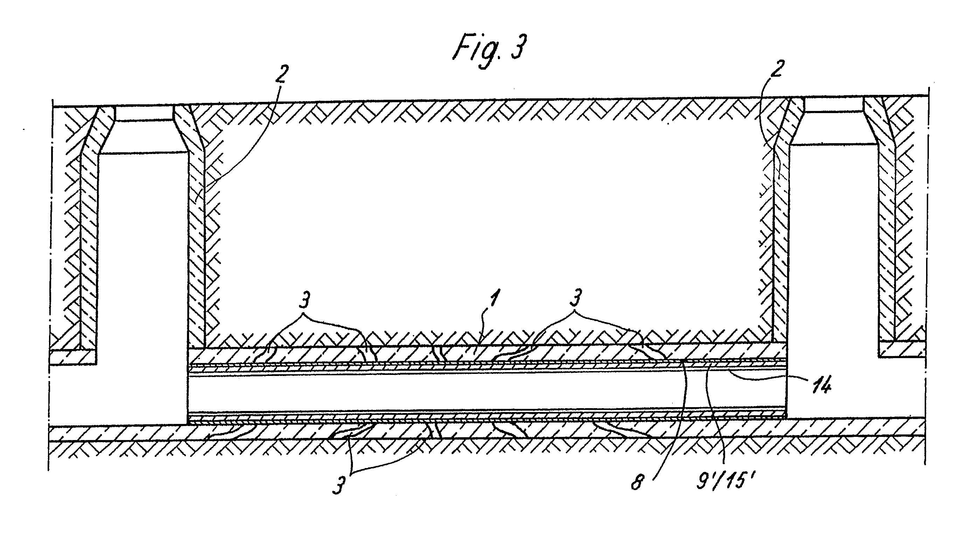

Eine im Erdreich verlegte Rohrleitung 1 ist mit mehreren nach außen führenden Kontrollschächten 2 versehen, wobei in den Figuren 1 und 3 lediglich das zwischen zwei Kontrollschächten leigende Teilstück der Rohrleitung 1 dargestellt ist. Die Rohrleitung 1 ist beispielsweise mit mehreren Rissen 3 versehen. In das zwischen den Kontrollschächten 2 liegende Teilstück der Rohrleitung 1 ist bereits ein Auskleideschlauch 4 in bekannter, nicht näher erläuterter Weise mittels eines Seiles 5 und einer nicht dargestellten Winde eingezogen bzw. eingeschwommen worden. Das freie Ende des Seiles 5 und das zugewandt liegende Ende des Auskleideschlauches 4 sind in einem Zugkörper 6 befestigt, der mit einem nicht dargestellten Luftausströmkanal versehen ist, in den ein Ausströmventil 7 eingesetzt ist. Der Auskleideschlauch 4 besteht aus einer äußeren Deckschicht 8 und einer angrenzenden Innenlage 9, die aus einem harzabsorierenden Material hergestellt ist. In der in der Figur 1 dargestellten Lage ist die Innenlage 9 bereits mit Harz getränkt. Der Auskleideschlauch 4 könnte beispielsweise aus einem Vliesstoff mit einer äußeren Kunststoffbeschichtung aus beispielsweise Polyurethan hergestellt werden. Die Form des Auskleideschlauches 4 ist aus der Figur 1 erkennbar, Danach ist eine Seite des Schlauches nach Art einer Seitenfalte nach innen gelegt.

In nicht dargestellter Weise könnte in die zuvor gereinigte Rohrleitung ein Wasserbett eingefüllt werden, dessen Spiegelhöhe so bemessen ist, daß der Schlauch mit seiner Breite auf diesem Wasserbett aufliegt.

Wie aus Figur 4 erkennbar, ist die äußere Deckschicht 8 des Auskleideschlauches 4 mit Durchtrittsöffnungen 10 versehen, durch die beim Andrücken des Auskleideschlauches 4 gegen die innere Fläche der Rohrleitung 1 in der Innenlage 9 vorhandenes überschüssiges Harz zur Bildung eines zusätzlichen Filmes 11 hindurchtritt. Dieser Film 11 ist in der Figur 4 als ein Kreisring von gleichbleibender Dicke gezeichnet. Im Gegensatz dazu kann er auch bereichsweise in unterschiedlichen Dicken auftreten und in die Risse 3 eindrigen.

Die Durchtrittsöffnungen 10 werden während des Einziehens des Auskleideschlauches 4 in die äußere Deckschicht 1 eingebracht. Zu diesem Zweck ist in dem jeweiligen Kontrollschacht 2 ein nicht näher erläutertes Perforierwerk oder eine Lochstanze 12 vorgesehen.

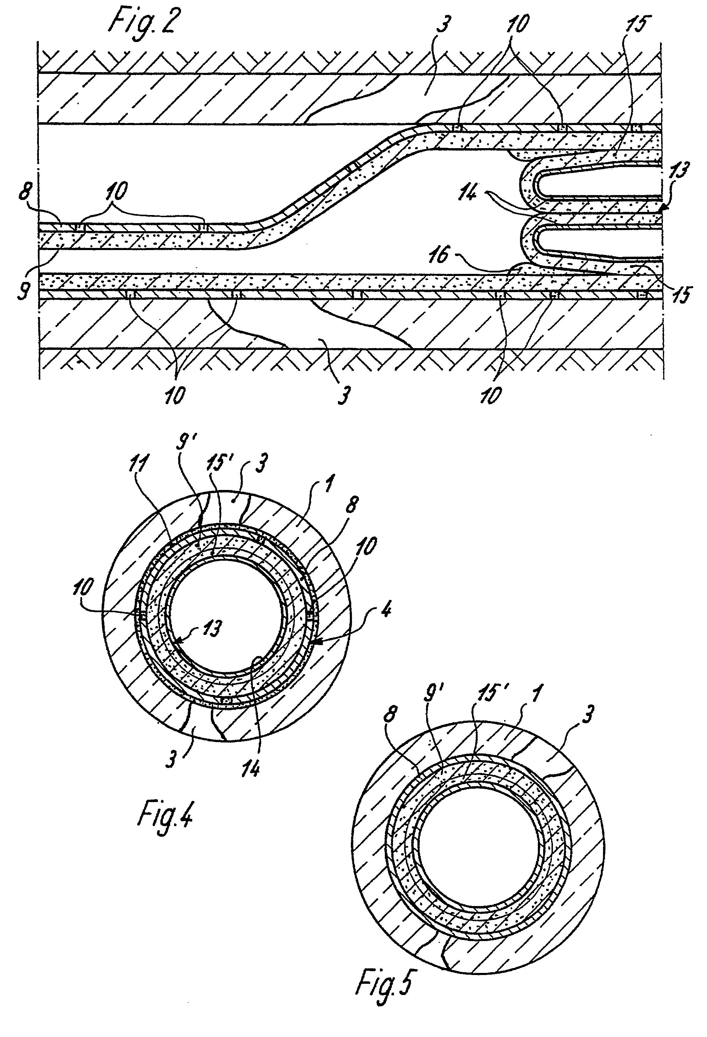

Aus der Figur 2 ist das Andrücken des Auskleideschlauches 4 mittels eines noch näher erläuterten Kalibrierschlauches 13 dargestellt. Der Kalibrierschlauch 13 besteht aus zwei Schichten 14, 15. Die Schicht 15 besteht aus einem harzabsorierenden Material, während die Schicht 14 aus einer undurchlässigen Folie besteht. Wie aus Figur 2 erkennbar, liegt die harzabsorierende Schicht vor dem Einbringen des Kalibrierschlauches 13 in den Auskleideschlauch 14 an der Innenseite. Die Einbringung des Kalibrierschlauches 13 erfolgt in an sich bekannter Weise durch Umstülpen, welches in der einschlägigen Branche auch als inversieren bezeichnet wird. Dadurch gelangt die harzabsorierende Schicht 15 nach außen und berührt die ebenfalls kmit Harz getränkte Innenlage 9 des Auskleideschlauches 4. Das Umstülpen des Kalibrierschlauches 13 erfolgt in nicht dargestellter und nicht näher erläuterter Weise durch ein Druckmittel, beispielsweise mit ener Wassersäule konstanter Spiegelhöhe.

Durch die Druckbeaufschlagung des Kalibrierschlauches 13 wird der Auskleideschlauch 4 vom flachgelegten Zustand in die Querschnittsform der Rohrleitung 1 überführt und gegen die Innenflächen gedrückt. Dabei wird das überschüssige Harz, welches in einer oder in beiden Schichten vorhanden sein kann, durch die Durchtrittsöffnungen 10 nach außen gedrückt. Da überschüssige Harz schiebt sich vor den unzustülpenden Kalibrierschlauch 13 in Form einer Wulst 16 her.

Bei der besonders vorteilhaften Ausführung, bei der überschüssiges Harz durch die Druchtrittsöffnungen 10 der äußeren Deckschicht des Auskleideschlauches 4 gepreßt wird, wird in vorteilhafter Weise die Innenlage 9 mit einer den Sättigungsgrad übertreffenden Harzmenge versehen.

In der Figur 3 ist eine bereits sanierte Rohrleitung im Längsschnitt dargestellt. Eine gleiche Rohrleitung ist in der Figur 5 im Querschnitt dargestellt. Danach ist die äußere Deckschicht 8 des Auskleideschlauches 4 vollkommen geschlossen. Die zu einer gemeinsamen Schicht ausgehärtete Innenlage 9 und die Schicht 15 sind mit 9' und 15' bezeichnet. Die nach dem Umstülpen des Kalibrierschlauches 13 die Innenfläche der Rohrleitung bildende Folie ist wiederum mit dem Bezugszeichen 14 versehen.

Aus der Figur 4 ist erkennbar, daß sich der zwischen der äußeren Deckschicht 8 des Auskleideschlauches 4 und der Innenfläche der Rohrleitung 1 bildende Film 11 eine gleichbleibende Dicke hat. In der praktischen Ausführung kann dieser Film jedoch auch eine unregelmäßige Form aufweisen, die insbesondere dadurch bedingt ist, daß auch überschüssiges Harz in die Risse 3 oder in Muffen der Rohrverbindungen eintritt. In der Figur 4 ist die Innenlage 9 des Auskleideschlauches 4 mit dem Bezugszeichen 9' und die nach dem Einbringen außen liegende Schicht 15 des Kalibrierschlauches 13 mit dem Bezugszeichen 15' versehen. Die aneinanderliegenden Grenzflächen sind durch eine dünne Vollinie gekennzeichnet. Da jedoch das Harz, das in diesen Schichten enthalten ist, miteinander reagiert, kann man davon ausgehen, daß durch Vernetzung aus der Innenlage 9' und der Schicht 15' eine einzige Schicht gebildet wird, so daß die erwähnte dünne Vollinie als eine gedachte Grenzfläche zu sehen ist.

Die Darstellung nach der Figur 5 unterscheidet sich von der nach der Figur 4 dadurch, daß die äußere Deckschicht 8 des Auskleideschlauches 4 harzundurchläsig ist. Es findet demzufolge keine Verbindung und auch keine zusätzliche Abdichtung mit den Innenflächen der Rohrleitung 1 statt. Nach der Aushärtung könnte der aus zwei zweischichtigen Schläuchen gebildete Schlauch von drei Schichten als eine freistehende Auskleidung gesehen werden,

Welche der aufgezeigten Möglichkeiten zum Einsatz kommt, hängt von den jeweiligen Verhältnissen ab.

Im Gegensatz zu den in den Figuren 4 und 5 dargestellten Rohrleitungen mit kreisrundem Querschnitt, können auch Rohrleitungen mit einem davon abweichenden Querschnitt nach dem erfindungsgemäßen Verfahren saniert werden.

Die Zeit für die Dauer der chemischen Reaktion kann durch Zugabe von Zuschlagstoffen zu den Harzen beeinflußt werden. Als Harze werden vorzugsweise Polyesterharze, Epoxydharze und Polyurethansysteme verwendet.

## Patentansprüche

1. Verfahren zum Sanieren einer im Erdreich verlegten Rohrleitung, vorzugsweise eines Abwasserkanales, mittels eines Auskleideschlauches, der aus einer äußeren Deckschicht und einer angrenzenden harzabsorbierenden Innenschicht besteht, die vor dem Einbringen des Auskleideschlauches mit Harz getränkt wird und bei dem der Auskleideschlauch mittels eines Kalibrierschlauches gegen die Innenfläche der zu sanierenden Rohrleitung gepreßt wird, **dadurch gekennzeichnet, daß** der Kalibrierschlauch (13) vor dem Einführen in den Auskleideschlauch (4) an der der Harzschicht (9) des Auskleideschlauches (4) zugewandt liegenden Seite mit einer Schicht (15) versehen wird, die bei der Berührung mit der Harzschicht (9) des Auskleideschlauches (4) eine chemische Reaktion zur Aushärtung zumindest der Harzschicht (9) des Auskleideschlauches (4) einleitet.

2. Verfahren zum Sanieren einer im Erdreich verlegten Rohrleitung nach Anspruch 1, dadurch gekennzeichnet, daß auch die Schicht (15) des Kalibrierschlauches (13) bei der Berührung mit der Harzschicht (9) des Auskleideschlauches (4) aushärtet.

3. Verfahren zum Sanieren einer im Erdreich verlegten Rohrleitung nach Anspruch 1, dadurch gekennzeichnet, daß die dem Auskleideschlauch (4) zugewandt liegende Schicht (15) des Kalibrierschlauches (13) als eine harzabsorbierende Schicht ausgebildet ist.

4. Verfahren zum Sanieren einer im Erdreich verlegten Rohrleitung nach Anpruch 1 oder 3, dadurch gekennzeichnet, daß zumindest eine der harzabsorbierenden Schichten(9 bzw. 15)bis über den Sättigungsgrad hinaus mit Harz getränkt wird, und daß das überschüssige Harz durch in der äußeren Deckschicht (8) des Auskleideschlauches (4) vorgesehene Öffnungen (10) zur Bildung einer zusätzlichen Dichtmasse (11) nach außen gepreßt wird.

5. Verfahren zum Sanieren einer im Erdreich verlegten Rohrleitung, nach einem der vorhergehenden Ansprüche, dadurch gekennzeichnet, daß als Auskleideschlauch (4) ein mit Harz getränkter Glasfaserschlauch verwendet wird.

6. Verfahren zum Sanieren einer im Erdreich verlegten Rohrleitung nach einem der vorhergehenden Ansprüche, dadurch gekennzeichnet, daß der Kalibrierschlauch (3) durch Umstülpen mittels eines Druckmittels in den Auskleideschlauch (4) eingebracht wird, wobei nach dem Umstülpen die die chemische Reaktion auslösende Schicht (15) außen liegt.

7. Verfahren zum Sanieren einer im Erdreich verlegten Rohrleitung nach einem der vorhergehenden Ansprüche, dadurch gekennzeichnet, daß die harzabsorbierenden Schichten (9 bzw. 15) mit einem Kunstharz, wie z. B. Epoxyd- oder Polyesterharz getränkt sind.

8. Verfahren zum Sanieren einer im Erdreich verlegten Rohrleitung nach einem der vorhergehenden Ansprüche, dadurch gekennzeichnet, daß die Harzschicht (9) des Auskleideschlauches (4) und/oder der dieser Harzschicht zugewandt liegenden Schicht (15) des Kalibrierschlauches (13) mit einem Zuschlagstoff zur Beeinflussung der chemischen Reaktion versehen wird.

## Claims

1. Process for renovating a pipeline which is laid in the ground, preferably a sewer, by means of a lining tube which comprises an outer cover layer and an adjoining resin-absorbent inner layer which is impregnated with resin prior to the introduction of the lining tube and in which the lining tube is pressed against the inside surface of the pipeline to be renovated by means of a calibration tube, characterized in that prior to being introduced into the lining tube (4) the calibration tube (13) is provided at the side which is towards the resin layer (9) of the lining tube (4) with a layer (15) which, upon contact with the resin layer (9) of the lining tube (4), initiates a chemical reaction for hardening at least the resin layer (9) of the lining tube (4).

2. A process for renovating a pipeline which is laid in the ground, according to claim 1, characterised in that the layer (15) of the calibration tube (13) also hardens upon contact with the resin layer (9) of the lining tube (4).

3. A process for renovating a pipeline which is laid in the ground, according to claim 1, characterised in that the layer (15) of the calibration tube (13), which is towards the lining tube (4), is in the form of a resin-absorbent layer.

4. A process for renovating a pipeline which is laid in the ground, according to claim 1 or claim 3, characterized in that at least one of the resin-absorbent layers (9 or 15) is impregnated with resin to beyond the level of saturation and that the excess resin is pressed outwardly through openings (10) provided in the outer cover layer (8) of the lining tube (4) to form an additional sealing material (11).

5. A process for renovating a pipeline which is laid in the ground, according to one of the preceding claims, characterised in that a glass fibre tube which is impregnated with resin is used as the lining tube (4).

6. A process for renovating a pipeline which is laid in the ground, according to one of the preceding claims, characterised in that the calibration tube (13) is introduced into the lining tube (4) by being turned inside out by means of a pressure medium, wherein after the operation of turning the calibration tube inside out, the layer (15) which triggers off the chemical reaction is on the outside.

7. A process for renovating a pipeline which is laid in the ground, according to one of the preceding claims, characterised in that the resin-absorbent layers (9 or 15) are impregnated with a synthetic resin such as for example epoxy or polyester resin.

8. A process for renovating a pipeline which is laid in the ground, according to one of the preceding claims, characterised in that the resin layer (9) of the lining tube (4) and/or the layer (15) of the calibration tube (13), which is towards said resin layer, is provided with an additive for influencing the chemical reaction.

**Revendications**

1. Procédé d'assainissement d'une conduite enfouie dans le sol, de préférence un canal d'eaux usées, au moyen d'un tuyau flexible de garnissage, qui se compose d'une couche de recouvrement extérieure et d'une couche intérieure adjacente capable d'absorber la résine qui, avant d'introduire le tuyau flexible de garnissage, est imprégnée de résine et dans lequel le tuyau flexible de garnissage est pressé au moyen d'un tuyau flexible de calibrage contre la face interne de la conduite à assainir, caractérisé en ce que le tuyau flexible de calibrage (13) est, avant d'être introduit dans le tuyau flexible de garnissage (4), recouvert du côté dirigé vers la couche de résine (9) du tuyau flexible de garnissage (4) d'une couche (15) qui, au contact de la couche de résine (9) du tuyau flexible de garnissage (4) déclenche une réaction chimique en vue du durcissement d'au moins la couche de résine (9) du tuyau flexible de garnissage (4).

2. Procédé d'assainissement d'une conduite enfouie dans le sol selon la revendication 1, caractérisé en ce que la couche (15) du tuyau flexible de calibrage (13) durcit aussi au contact de la couche de résine (9) du tuyau flexible de garnissage (4).

3. Procédé d'assainissement d'une conduite enfouie dans le sol selon la revendication 1, caractérisé en ce que la couche (15) du tuyau flexible de calibrage (13) dirigée vers le tuyau flexible de garnissage (4) est conçue comme une couche capable d'absorber la résine.

4. Procédé d'assainissement d'une conduite enfouie dans le sol selon la revendication 1 ou 3, caractérisé en ce qu'au moins une des couches absorbant la résine (9 ou 15) est imprégnée de résine au-delà du degré de saturation et en ce que la résine excédentaire est exprimée vers l'extérieur à travers les ouvertures (10) pratiquées dans la couche de recouvrement extérieure (8) du tuyau flexible de garnissage (4) de manière à former une masse d'étanchéité (11) supplémentaire.

5. Procédé d'assainissement d'une conduite enfouie dans le sol selon l'une des revendications précédentes, caractérisé en ce qu'un tuyau flexible en fibre de verre imprégné de résine est utilisé comme tuyau flexible de garnissage (4).

6. Procédé d'assainissement d'une conduite enfouie dans le sol selon l'une des revendications précédentes, caractérisé en ce que le tuyau flexible de calibrage (13) est introduit par retournement dans le tuyau flexible de garnissage (4) en recourant à un fluide sous pression tandis que, après le retournement, la couche (15) qui déclenche la réaction chimique se trouve à l'extérieur.

7. Procédé d'assainissement d'une conduite enfouie dans le sol selon l'une des revendications précédentes, caractérisé en ce que les couches qui absorbent la résine (9 ou 15) sont imprégnées d'une résine synthétique, telle que par exemple une résine époxyde ou une résine polyester.

8. Procédé d'assainissement d'une conduite enfouie dans le sol selon l'une des revendications précédentes, caractérisé en ce que la couche de résine (9) du tuyau flexible de garnissage (4) et/ou la couche (15) du tuyau flexible de calibrage (13) dirigée vers cette couche de résine sont enrichies d'un granulat destiné à influencer la réaction chimique.

*Fig.1*

EP 0 260 341 B1

EP 0 260 341 B1

Fig. 2

Fig. 4

Fig. 5

*Fig. 3*

EP 0 260 341 B1